# EUROPÄISCHE PATENTSCHRIFT

(11) **EP 0 675 351 B1**
(45) Veröffentlichungstag und Bekanntmachung des Hinweises auf die Patenterteilung: **19.04.2000**
(21) Anmeldenummer: 95104714.1
(22) Anmeldetag: 30.03.1995
(51) Int. Cl.: G01M 11/00

(54) **Verfahren zur Bestimmung der Dispersionsnullstelle eines Lichtwellenleiters**
Procedure for determining the wavelength in an optical fibre corresponding to zero dispersion
Procédé de détermination dans un fibre optique la longeur d'ondes pour laquelle il y n'a pas de dispersion

(30) Priorität: 30.03.1994 DE 4411063
(43) Veröffentlichungstag der Anmeldung: 04.10.1995
(73) Patentinhaber: ALCATEL, 75008 Paris (FR)
(72) Erfinder: Veith, Gustav, Dr., D-75378 Bad Liebenzell (DE); Bülow, Henning, Dr., D-70597 Stuttgart (DE)
(74) Vertreter: Kugler, Hermann, Dipl.-Phys.

(56) Entgegenhaltungen:
- PATENT ABSTRACTS OF JAPAN vol. 940 no. 012 & JP-A-06 331495 (MITSUBISHI ELECTRIC CORP) 2.Dezember 1994,
- PATENT ABSTRACTS OF JAPAN vol. 017 no. 596 (P-1636) ,29.Oktober 1993 & JP-A-05 180729 (NIPPON TELEGR & TELEPH CORP) 23.Juli 1993,
- PATENT ABSTRACTS OF JAPAN vol. 13 no. 176 (E-749) ,25.April 1989 & JP-A-01 005085 (NEC CORP) 10.Januar 1989,
- PATENT ABSTRACTS OF JAPAN vol. 013 no. 149 (P-855) ,12.April 1989 & JP-A-63 311309 (SUMITOMO ELECTRIC IND LTD) 20.Dezember 1988,
- PATENT ABSTRACTS OF JAPAN vol. 011 no. 345 (P-636) ,12.November 1987 & JP-A-62 127640 (HITACHI CABLE LTD) 9.Juni 1987,

## Beschreibung

Die Erfindung betrifft ein optisches Nachrichtenübertragungssystem mit einer Vorrichtung zur Bestimmung der Dispersionsnullstelle eines Lichtwellenleiters.

Bei der Übertragung von optischen Signalen einer sehr hohen Bitfolgefrequenz über Fernübertragungsstrecken, z.B. Transatlantikstrecken, stellt die chromatische Dispersion eine Größe dar, durch die die Bitfolgefrequenz und/oder die Übertragungslänge begrenzt sind. Ein Qualitätsmaß für ein optisches Übertragungssystem ist z.B. das Produkt aus Bitfolgefrequenz und Übertragungslänge.

Ein optisches Nachrichtenübertragungssystem, dessen Minimalkonfiguration aus einer Lichtquelle, einem Lichtwellenleiter und einem optischen Empfänger besteht, ist allgemein bekannt.

Chromatische Dispersion bedeutet, daß die Gruppengeschwindigkeit, das ist die Geschwindigkeit, mit der sich das optische Signal durch den Lichtwellenleiter ausbreitet, wellenlängenabhängig ist.

Dadurch breitet sich jede spektrale Komponente eines Impulses mit unterschiedlicher Geschwindigkeit im Lichtwellenleiter aus. Ein schmaler eingekoppelter Impuls wird somit, je nach seiner spektralen Breite, mehr oder weniger stark infolge von Laufzeitunterschieden gedehnt. Dem Produkt aus Bitfolgefrequenz und Übertragungslänge ist dadurch eine Grenze gesetzt.

Die erwähnte chromatische Dispersion setzt sich zusammen aus der Materialdispersion und der Wellenleiterdispersion. Eine tiefergehende Abhandlung der Dispersion ist z.B. dem Buch "Lichtwellenleiter-Technik", Lutzke D., Pflaum-Verlag, München 1986, Seiten 35-42, zu entnehmen.

Kommerziell erhältliche Standard-Einmodenfaser haben eine Dispersionsnullstelle λₒ bei ca. 1,3 µm und sogenannte dispersionsverschobene (engl.: Dispersion shifted fibres, DSF) bei ca. 1,55 µm. Die Dispersionsnullstell λₒ ist die Wellenlänge, bei der die Dispersion, angegeben in ps/(nm·km) Null ist.

Vor allem bei höchsten Bitfolgefrequenzen in Verbindung mit einer Fernübertragungsstrecke wird eine Übertragung bei der Dispersionsnullstelle λₒ angestrebt, um Impulsverbreiterungen aufgrund der Dispersion zu vermeiden. Dazu ist eine exakte Kenntnis der Dispersionsnullstelle λₒ erforderlich.

Zur Messung der chromatischen Dispersion von Lichtwellenleitern sind zahlreiche Verfahren bekannt, z.B. differentielle Impulslaufzeitmessung und Impulsverbreitungsmessung. Solche Verfahren sind z.B. in E.G. Neumann: "Single-Mode-Fibers", Springer Series in Applied Optical Sciences, Vol. 57, Springer-Verlag, 1988, Seiten 408 bis 422, angegeben.

Diese Verfahren zur Bestimmung der chromatischen Dispersion sind technisch relativ aufwendig. Für die Impulslaufzeitmessung z.B. bedeutet dies, daß mehrere Laser notwendig sind, um Impulse verschiedener Wellenlänge auszusenden, und daß die Dispersionsnullstelle durch Näherungsverfahren mit erheblichen Meßungenauigkeiten bestimmt wird.

Besonders aufwendig ist die Durchführung der bekannten Verfahren, wenn die chromatische Dispersion bereits verlegter Lichtwellenleiterstrecken bestimmt werden soll. Verlegte Lichtwellenleiterstrecken sind üblicherweise aus Teilstrecken zusammengespleißt, deren Lichtwellenleiter unterschiedliche Dispersionsnullstellen haben. Dies kann z.B. herstellungsoder umweltbedingt (z.B. durch Temperatur, Druck) sein. Das Bestimmen der gemittelten Dispersionsnullstelle λₒ der gesamten Strecke wird dadurch noch aufwendiger und ungenauer.

Aus der JP-A-05 180729 ist eine Messmethode bekannt, um die Nullstelle der Dispersion einer Glasfaser zu bestimmen. Dabei werden eine veränderbare Wellenlänge und eine feste Wellenlänge in eine Glasfaser eingespeist. Mit einem Spektrumanalysator wird das übertragene Licht untersucht. Bei Betrachtung des Spektrums ergibt sich ein Maximum in der Mischwellenlänge, das der Nullstelle der Dispersion entspricht. Es handelt sich dabei um einen Untersuchungsaufbau.

Es ist Aufgabe der Erfindung, ein optisches Nachrichtenübertragungssystem anzugeben, bei dem das Verfahren zur Bestimmung des Dispersionsnullstelle für eine Optimierung der Übertragung angewendet wird. Diese ist, wie in Anspruch 1 angegeben, gelöst.

Vorteilhafte Ausgestaltungen der Erfindung sind in den Unteransprüchen angegeben.

Vorteilhaft an dem erfindungsgemäßen optischen Nachrichtenübertragungssystem mit Bestimmung der Dispersionsnullstelle gₒ ist, daß es auch für bereits verlegte, verspleißte Lichtwellenleiterstrecken geeignet ist.

Die Erfindung wird im folgenden anhand von Beispielen näher erläutert. Es zeigen:
- Fig. 1: eine Vorrichtung zur Bestimmung der Dispersionsnullstelle eines Lichtwellenleiters,
- Fig. 2: ein optisches Nachrichtenübertragungssystem mit einem Regler und einer Auswerteeinrichtung.

Bei dem erfindungsgemäßen optischen Nachrichten übertragungssystem kommt der Effekt der Vierwellenmischung (engl.: four-wave mixing, FWM) zur Anwendung, der an sich bekannt ist aus: K. Inoue: "Four-Wave Mixing in an Optical Fiber in the Zero-Dispersion Wavelength Region", Journal of Lightwave Technology, vol.10, no. 11, November 1992, Seiten 1553 bis 1561.

Dort ist dieser nichtlineare, in Lichtwellenleitern auftretende Effekt beschrieben, bei dem durch nichtlineare Wechselwirkungen von drei Lichtsignalen unterschiedlicher Wellenlängen ein viertes Lichtsignal, ein Mischprodukt, mit einer vierten Wellenlänge erzeugt wird. Dies führt vor allem im Vielkanal-Übertragungssystem zu unerwünschten Störungen.

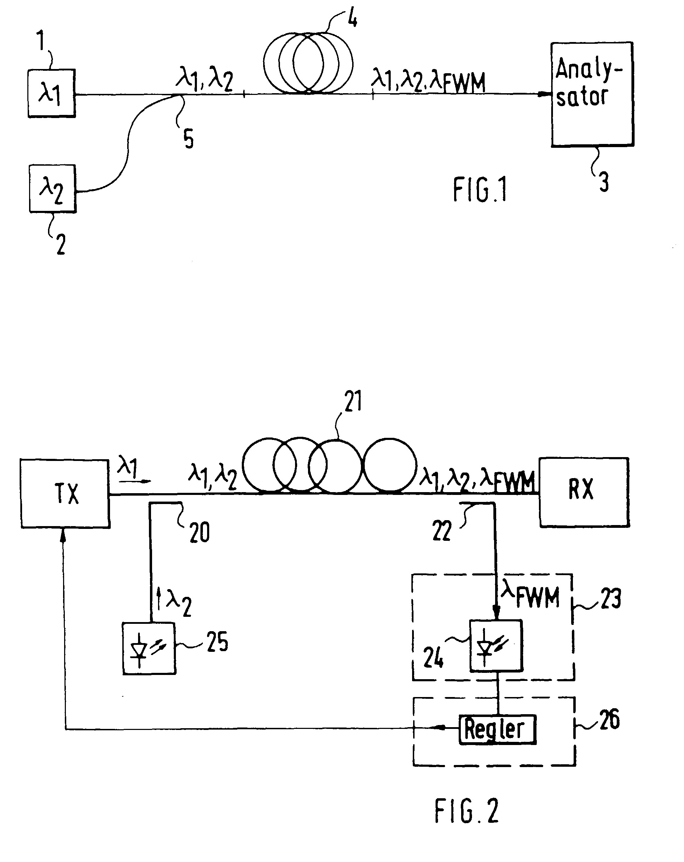

Werden anstelle der drei Lichtsignale nur zwei Lichtsignale in den Lichtwellenleiter eingespeist, wird dies als partiell degenerierte Vierwellenmischung bezeichnet.
Diese beiden Fälle sind in Fig. 1 des angegebenen Dokuments (K. Inoue) gezeigt.

Für den partiell degenerierten Fall erfolgt maximale Konversion von optischer Leistung des Lichtsignals zum Mischprodukt mit der Frequenz f_{FWM}, wenn die Frequenz fᵢ des anderen Lichtsignals gleich der Dispersionsnullstelle λₒ (Frequenz fₒ) ist.

Zur Bestimmung der Dispersionsnullstelle wird diese in der Nachrichtenübertragungstechnik im allgemeinen als störender Effekt bekannte Vierwellenmischung bewußt genutzt, um dadurch die Dispersionsnullstelle λₒ einer Lichtwellenleiterstrecke zu bestimmen, oder um dadurch bei einem optischen Nachrichtenübertragungssystem die Übertragung bei der Dispersionsnullstelle λₒ zu gewährleisten.

Unter Dispersionsnullstelle λₒ ist im Zusammenhang mit der Erfindung auch ein betragsmäßiges Minimum der Dispersion zu verstehen.

In Fig. 1 ist eine Vorrichtung zur Bestimmung der Dispersionsnullstelle λₒ eines Lichtwellenleiters 4 gezeigt. Sie hat eine erste Lichtquelle 1, die ein Lichtsignal einer ersten Wellenlänge λ₁ aussendet, eine zweite Lichtquelle 2, die ein Lichtsignal einer zweiten Wellenlänge λ₂ aussendet, einen Koppler 5, der beide Lichtsignale in den Lichtwellenleiter 4 einkoppelt und einen Analysator 3 zur Auswertung des nach dem Lichtwellenleiter 4 vorhandenen Lichts. Der Analysator 3 ist z.B. ein Spektralanalysator oder ein Filter mit nachfolgendem Detektor. Die Lichtquellen 1, 2 sind vorzugsweise durchstimmbare Halbleiterlaser oder Faserlaser und der Koppler 5 ist z.B. ein Faserkoppler. Bei ausreichend hohen optischen Leistungen der eingekoppelten Lichtsignale, die durch evtl. optische Verstärker einstellbar sind, entsteht durch die nichtlineare Wechselwirkung (partiell degenerierte Vierwellenmischung) beider Lichtsignale in dem Lichtwellenleiter 4 das Mischprodukt mit einer Wellenlänge λ_{FWM}. Das nach dem Lichtwellenleiter 4 vorhandene Licht setzt sich somit aus den beiden Lichtsignalen und dem Mischprodukt, mit den entsprechenden Wellenlängen λ₁, λ₂, λ_{FWM} zusammen.

Zur Verdeutlichung sind die vorkommenden Wellenlängen g₁, g₂, g_{FWM} an entsprechenden Stellen des Lichtwellenleiters 4 eingezeichnet.

Die Filter im Analysator 3 sind so ausgelegt, daß sie nur die Wellenlänge λ_{FWM} des Mischprodukts durchlassen, so daß nur die optische Leistung des Mischprodukts ausgewertet wird.

Bei dem in der Vorrichtung nach Fig. 1 zur Anwendung kommenden Verfahren wird zur Bestimmung der Dispersionsnullstelle des Lichtwellenleiters 4 die Wellenlänge eines der beiden Lichtsignale so lange gezielt variiert, bis die mit dem Analysator 3 detektierte optische Leistung des Mischprodukts maximal wird. Dann stimmt die Wellenlänge dieses Lichtsignals mit der Dispersionsnullstelle λₒ überein.

Eine Variation der emittierten Wellenlänge eines Laser erfolgt z.B. dadurch, daß der Laserstrom verändert wird, da die Wellenlänge des emittierten Lichts u.a. eine Funktion des Laserstroms ist.

Bei der Vorrichtung und bei der Durchführung des Verfahrens sind die Wellenlängen λ₁, λ₂ so zu wählen,
- daß sie immer unterschiedlich sind,
- daß die zu variierende Wellenlänge innerhalb eines Bereichs der erwarteten Dispersionsnullstelle λₒ durchstimmbar ist, und
- daß die Wellenlänge, die nicht variiert wird, außerhalb des Bereichs der erwarteten Dispersionsnullstelle λₒ liegt.

In Fig. 2 ist ein beispielhaftes optisches Nachrichtenübertragungssystem mit den für das Verständnis der Erfindung relevanten Bestandteilen gezeigt. Wie allgemein bekannte Systeme hat es eine erste Lichtquelle TX, die ein erstes Lichtsignal, das z.B. ein Nachrichtensignal ist, einer ersten Wellenlänge λ₁ aussendet, einen Lichtwellenleiter 21 als Übertragungsstrecke und einen optischen Empfänger RX.

Bei diesem System erfolgt die Nachrichtenübertragung nur in einer Richtung. Prinzipiell kann es aber auch ein System sein, bei dem die Nachrichtenübertragung in beiden Richtungen erfolgt. Solch ein System hat dafür an jedem Ende der Übertragungsstrecke mindestens eine Lichtquelle und mindestens einen optischen Empfänger. Für die Erfindung ist dies jedoch nicht relevant.

Das in Fig. 2 gezeigte System hat außerdem sendeseitig eine zweite Lichtquelle 25, die ein zweites Lichtsignal einer zweiten Wellenlänge λ₂ aussendet, und einen ersten Koppler 20, und empfangsseitig einen zweiten Koppler 22, eine Auswertevorrichtung 23 und einen Regler 26. Die Auswertevorrichtung 23 hat einen Detektor 24. Sie ist über einen Rückkanal mit der ersten Lichtquelle TX verbunden. Durch den ersten Koppler 20 wird das erste Lichtsignal der ersten Lichtquelle TX und das zweite Lichtsignal der zweiten Lichtquelle 25 in den Lichtwellenleiter 21 eingekoppelt, in der wie bereits erwähnt durch Vierwellenmischung das Mischprodukt mit der Wellenlänge g_{FWM} entsteht. Das zweite Lichtsignal der zweiten Lichtquelle 25 ist mit keiner zu übertragenden Nachricht moduliert. Dieses zweite Lichtsignal kann ein Gleichsignal oder ein gepulstes Lichtsignal sein.
Durch den empfangsseitigen zweiten Koppler 22 wird ein Teil des Lichts, das sich aus den beiden Lichtsignalen und dem Mischprodukt zusammensetzt, ausgekoppelt und der Auswertevorrichtung 23 zugeführt. In dieser Auswertevorrichtung 23 wird nur das Mischprodukt ausgewertet. Dies kann z.B. dadurch erfolgen, daß zwischen dem zweiten Koppler 22 und dem Detektor 24 ein optischer Filter angeordnet ist, das nur das Mischprodukt durchläßt, oder daß der Detektor 24 nur für das Mischprodukt empfindlich ist. Ein vom Detektor 24 abgegebenes Signal wird dem Regler 26 zugeführt, der daraus eine Stellgröße ableitet, die eine Funktion der optischen Leistung des Mischprodukts ist.

Mit dieser Stellgröße, die über den Rückkanal zur ersten Lichtquelle TX übertragen wird, kann die erste Wellenlänge λ₁ des ersten Lichtsignals geregelt werden.

Für die Koppler 20, 22 gilt allgemein, daß sie vorzugsweise Faserkoppler sind; es können aber auch andere Mittel zum Einund Auskoppeln von Licht verwendet werden, z.B. Linsensysteme.

Prinzipiell ist dafür zu sorgen, daß an einem Ende des Lichtwellenleiters 21 zwei Lichtsignale so eingekoppelt werden, daß sie in diesem in Wechselwirkung treten können, und daß am anderen Ende des Lichtwellenleiters 21 das entstehende Mischprodukt ausgewertet werden kann.

Bezüglich des Rückkanals ist zu ergänzen, daß darin die Übertragung optisch oder elektrisch erfolgen kann. In dem in Fig. 2 gezeigten System erfolgt die Übertragung der Stellgröße elektrisch, d.h. diese Stellgröße steuert direkt die erste Lichtquelle TX. Es ist aber auch möglich, daß vor der Übertragung eine Umwandlung in eine optische Stellgröße erfolgt, die dann optisch übertragen wird und sendeseitig wieder in eine elektrische Stellgröße umgewandelt wird. Außerdem ist es möglich, die Auswertevorrichtung 23 mit der ersten Lichtquelle zu kombinieren, d.h. in einem optischen Sender zu integrieren.

Die Auslegung des Rückkanals (elektrisch oder optisch; Auswertevorrichtung und/oder Regler sendeoder empfangsseitig) ist für die Erfindung nicht relevant, wichtig ist, daß die Information über die optische Leistung des Mischprodukts zur ersten Lichtquelle TX übertragen werden kann.

Die Übertragung soll in diesem System bei der Dispersionsnullstelle λₒ erfolgen, d.h. die Wellenlänge λ₁ des ersten Lichtsignals muß an den Lichtwellenleiter 21 stetig angepaßt werden, da sich die Dispersion durch Umwelteinflüsse während des Betriebs ändern kann. In diesem System wird die Wellenlänge λ₁ des Lichtsignals derart geregelt, daß die optische Leistung des Mischprodukts maximal wird. Um dieses Maximum einzustellen wird die Wellenlänge λ₁ in einem Bereich um die Dispersionsnullstelle λₒ verändert ("wobbeln"). Die Wellenlänge λ₂ des zweiten Lichtsignals ist dabei immer ungleich der Dispersionsnullstelle λₒ.

Dieses Optimieren der Wellenlänge λ₁ kann z.B. während Wartungspausen des Systems oder auch während des Betriebs durchgeführt werden.

## Patentansprüche

1. Optisches Nachrichtenübertragungssystem,
- bei dem in einem Sender eine erste Lichtquelle (TX) zur Aussendung eines ersten Lichtsignals einer ersten Wellenlänge (λ₁) und eine zweite Lichtquelle (25) zur Aussendung eines zweiten Lichtsignals einer zweiten Wellenlänge (λ₂) vorhanden sind,
- bei dem die beiden Lichtsignale in einen Lichtwellenleiter (21) einkoppelbar sind,
- bei dem die zweite Wellenlänge (λ₂) des zweiten Lichtsignals so gewählt ist, daß sie ungleich der Wellenlänge an der Dispersionsnullstelle (λₒ) des Lichtwellenleiters (21) ist, dadurch gekennzeichnet, daß
- Mittel (22) zur empfangsseitigen Auskopplung mindestens eines Teils des Lichts vorhanden sind,
- in einer Auswertevorrichtung (23) ein in dem empfangsseitig ausgekoppelten Licht enthaltenes und im Lichtwellenleiter (21) aus einer nichtlinearen Wechselwirkung der Lichtsignale entstandenes Mischprodukt auswertbar ist,
- durch einen Regler (26) aus dem ausgewerteten Mischprodukt eine Stellgröße ableitbar ist, und
- die erste Wellenlänge (λ₁) der ersten Lichtquelle (TX) dadurch so regelbar ist, daß die optische Leistung des Mischprodukts maximal ist.

2. Optisches Nachrichtenübertragungssystem nach Anspruch 1, bei dem die Auswerteeinrichtung (23) einen Detektor (24) hat, der nur für die Wellenlänge des Mischprodukts empfindlich ist.

3. Optisches Nachrichtenübertragungssystem nach Anspruch 1 oder 2, bei dem die Auswerteeinrichtung (23) einen Detektor (24) und ein vor dem Detektor (24) angeordnetes optisches Filter hat, das nur die Wellenlänge des Mischprodukts durchläßt.

4. Optisches Nachrichtenübertragungssystem nach einem der vorhergehenden Ansprüche bei dem eine Auswertevorrichtung (23) im Sender vorhanden ist.

5. Optisches Nachrichtenübertragungssystem nach einem der vorhergehenden Ansprüche bei dem eine Auswertevorrichtung (23) im Empfänger vorhanden ist.

## Claims

1. An optical communications transmission system
- wherein a first light source (TX) for the emission of a first light signal at a first wavelength (λ₁) and a second light source (25) for the emission of a second light signal at a second wavelength (λ₂) are arranged in a transmitter,
- wherein the two light signals can be input-coupled into an optical waveguide (21),
- wherein the second wavelength (λ₂) of the second light signal is selected such that it is unequal to the zero dispersion wavelength (λ₀) of the optical waveguide (21), characterised in that
- means (22) are provided for the output-coupling of at least a part of the light at the receiving end,
- a mixing product, which is contained in the light output-coupled at the receiving end and which has been formed in the optical waveguide (21) from a non-linear interaction between the light signals, can be evaluated in an evaluating device (23),
- a correcting variable can be derived from the evaluated, mixing product by a controller (26) and
- the first wavelength (λ₁) of the first light source (TX) can thus be controlled such that the optical power of the mixing product is the maximum.

2. An optical communications transmission system according to Claim 1, wherein the evaluating device (23) has a detector (24) which is sensitive only to the wavelength of the mixing product.

3. An optical communications transmission system according to Claim 1 or 2, wherein the evaluating device (23) has a detector (24) and an optical filter which is arranged upstream of the detector (24) and which transmits only the wavelength of the mixing product.

4. An optical communications transmission system according to one of the preceding claims, wherein an evaluating device (23) is arranged in the transmitter.

5. An optical communications transmission system according to one of the preceding claims, wherein an evaluating device (23) is arranged in the receiver.

## Revendications

1. Système optique de transmission de messages,
- dans lequel il existe, dans un émetteur, une première source de lumière (TX) pour émettre un premier signal lumineux d'une première longueur d'onde (λ₁), et une deuxième source de lumière (25) pour émettre un deuxième signal lumineux d'une deuxième longueur d'ondo (λ₂),
- dans lequel les deux signaux lumineux peuvent être injectés dans un guide d'ondes lumineuse (21) ;
- dans lequel la deuxième longueur d'onde (λ₂) du deuxième signal lumineux est sélectionnée de telle sorte qu'elle est différente de la longueur d'onde au point zéro de dispersion (λ₀) du guide d'ondes lumineuses (21),
caractérisé en ce que
- des moyens (22) existent pour la sortie côté réception d'au moins une partie de la lumière,
- dans un dispositif de restitution (23) un produit mixte, contenu dans une lumière sortie côté réception et généré dans le guide d'ondes lumineuses (21) par une interaction non linéaire des signaux lumineux, peut être restitué,
- une variable réglante peut être dérivée par un régulateur (26) à partir du produit mixte restitué, et
- la première longueur d'onde (λ₁) de la première source de lumière (TX) est ainsi réglable de sorte que la puissance optique du produit mixte est maximale.

2. Système optique de transmission de messages selon la revendication 1, dans lequel le dispositif de restitution (23) comporte un détecteur (24) qui est sensible uniquement à la longueur d'onde du produit mixte.

3. Système optique de transmission de messages selon la revendication 1 ou 2, dans lequel le dispositif de restitution (23) comporte un détecteur (24) et un filtre optique, disposé en amont du détecteur (24), qui ne laisse passer que la longueur d'onde du produit mixte.

4. Système optique de transmission de messages selon l'une quelconque des revendications précédentes, dans lequel un dispositif de restitution (23) existe dans l'émetteur.

5. Système optique de transmission de messages selon l'une quelconque des revendications précédentes, dans lequel un dispositif de restitution (23) existe dans le récepteur.
